Europäisches Patentamt

European Patent Office

Office européen des brevets

(11) Publication number: **0 315 239**
**A1**

## (12) EUROPEAN PATENT APPLICATION

(21) Application number: 88202318.7

(51) Int. Cl.⁴: **C08L 95/00**

(22) Date of filing: **18.10.88**

(30) Priority: **02.11.87 IT 2248387**

(43) Date of publication of application:
**10.05.89 Bulletin 89/19**

(84) Designated Contracting States:
**AT BE CH DE ES FR GB GR LI LU NL SE**

(71) Applicant: **ENICHEM ANIC S.p.A.**
**Via Ruggero Settimo 55**
**I-90139 Palermo(IT)**

(72) Inventor: **Iacono, Carmelo**
**Corso Vittorio Veneto 443**
**I-97100 Ragusa(IT)**
Inventor: **Tribastone, Salvatore**
**Via Esperanto 3**
**I-97100 Ragusa(IT)**

(74) Representative: **Roggero, Sergio et al**
**Ing. Barzanò & Zanardo Milano S.p.A. Via**
**Borgonuovo 10**
**I-20121 Milano(IT)**

(54) Bituminous composition and its use in the water-proofing sector.

(57) A water-proofing bituminous composition contains bitumen and a polymer of ethylene with at least one further alpha-olefin comonomer containing from 3 to 18 carbon atoms in its molecule, having a linear or branched chain.

Water-proofing sheaths are disclosed, which contain the bituminous composition in association with a reinforcement, in particular a non-woven fabric or fiberglass web.

EP 0 315 239 A1

# "BITUMINOUS COMPOSITION AND ITS USE IN THE WATER-PROOFING SECTOR"

The present invention relates to a bituminous composition and to its use in the sector of waterproofing, in particular in water-proofing sheaths.

Bituminous compositions are known in the art, in which a bitumen is associated with an organic polymer, in particular atactic polypropylene. By means of the addition of atactic polypropylene, various characteristics of bitumen, as well as the processability of the resulting compositions are imprcved.

These compositions are usually employed in combination with a support, as water-proofing sheaths mainly useable in the water-proofing of floors.

When used in comparably high proportions relatively to bitumen, atactic polypropylene is capable of conferring interesting characteristics on it. Unfortunately, the bituminous compositions containing a rather high percentage of atactic polypropylene do not show a high enough consistency under medium-high temperature conditions and, under these conditions, the characteristics of "walkability" are quite endangered.

Attempts were made in theart in order to overcome such a drawback by adding to the composition some polypropylene in the isotactic form, as well as inorganic fillers, but such remedies made it possible the problem to be alleviated, but not to be satisfactorily solved.

Another undesired characteristic of the bitumen/atactic polypropylene compositions consists in their poor ageing strength.

Therefore, in the art the need was felt of improving the bituminous compositions, and for such a purpose attempts were made of replacing atactic polypropylene by other polymeric materials, also on considering the reduced availability of this material on the market, following the recent improvements introduced in the processes of production of isotactic polypropylene.

However, the substitution of atactic polypropylene by largely available organic polymers, such as, e.g., polyethylene (both high-density and low-density polyethylene), and copolymers of ethylene with vinyl acetate, did not make it possible the above mentioned problems to be solved, as reported by F. Schieroni in his paper "Guaine Bituminose e Impermeabilizzazione di Viadotti (Bituminous Sheaths and Viaduct Water-Proofing), published by the magazine "Impermeabilizzare" Nr. 4 (1977).

The present Applicant has surprisingly found now, that good-quality bituminous compositions free from the above disclosed drawbacks can be obtained by using particular polymers of ethylene with alpha-olefins as bitumen modifyino agents.

In accordance therewith, the present invention relates to a water-proofing bituminous composition characterized in that it contains:

a) bitumen; and

b) a polymer of ethylene with at least one comonomer selected from among the alpha-olefins containing from 3 to 18 carbon atoms in their molecule, with either linear or branched chain, with said polymer having a melt-flow index value comprised within the range of from 8 to 120 g/10 minutes, and a density value comprised within the range of from 0.880 to 0.920 g.ml.

According to a preferred form of practical embodiment, the composition of the present invention contains an ethylene-propylene copolymer having a meltflow index value comprised within the range of from 20 to 60 g/10 minutes, and a density value comprised within the range of from 0.890 to 0.910 g ml.

The composition according to the present invention can generally contain from 1 to 30 parts by weight of ethylene polymer per each 100 parts by weight of bitumen. In the preferred form of practical embodiment, such a composition contains from 20 to 25 parts by weight of ethylene polymer per each 100 parts by weight of bitumen.

The polymers used in the compositiosns of the present invention can be obtained by polymerizing ethylene with one or more of the above disclosed comonomers. under the influence of catalysts of Ziegler type.

The bitumens suitable for the intended purpose are those known in the art as distillation bitumens (from vacuum), generally having penetration values of from 40 to 200 dmm (according to ASTM D-5), and ball-ring values of from 35 to 60° C (according to ASTM D-36).

The compositions of the present invention are endowed with good general characteristics, including those relevant to the processability during the manufacturing and application steps. Furthermore, such compositions display improved characteristics of cold flexibility, and considerably improved characteristics as regards the "walkability".

In the present disclosure, and in the following experimental examples, the characteristics of cold

2

flexibility are expressed as degrees Celsius, and are evaluated according to the regulations for the sheaths (Aschimici-IGLAE), as reported in the magazinne "Impermeabilizzare" Nr. 4, 1976. Furthermore, the characteristics of "walkability" are expressed as dmm, and are evaluated by means of the measurement of an "impression", consisting in evaluating how deep a steel ball of 6 mm of diameter under a weight of 1 kg penetrates the composition over a time of 30 seconds, under well-defined temperature conditions.

This evaluation method is a modification of the standard ASTM D-5 method, with the variant that a ball is used instead of the pin, in order to evaluate the penetration depth.

The composition of the present invention can contain, besides bitumen and ethylene polymer, one or more usual additives selected from fillers, pigments, dyes and stabilizers.

The composition is useful for coating and insulating, e.g., pipes and tanks, also laid underground. Above all, said composition is useful in the preparation of water-proofing sheaths, in association with a support selected from felts, fabrics and laminates of organic and/or inorganic material. The support is preferably selected from non-woven polyester fabrics and fiberglass web. These sheaths typically have thicknesses of the order of 2-6 mm, and can be prepared by means of the usual processes known in the art, such as, e.g., the process as described by G. Bonfiglio in his paper "Manti Prefabbricati di Bitume e Resine per le Coperture (Prefabricated Mantles of Bitumen and Resins for Roofings)" published by the magazine Materie Plastiche ed Elastomeri, 38, Nr. 11, November 1972.

The sheaths are useful for water-proofing coatings in the building industry and in civil works in general, e.g., for coating and water-proofing floors, vertical walls, terraces, viaducts and basins for water collecting.

The sheaths can be provided with a surface coating of a metal sheet (e.g., a sheet of aluminum or of copper) for protective and light-reflecting purposes. As an alternative, a surface coating of marble or slate grit can be applied for protective purposes, and in order to supply the surfaces with pleasant aesthetical characteristics.

The following experimental examples are reported for the purpose of further illustrating the invention, and are not to be considered as limitative of the scope of the same invention.

## Example 1

An ethylene-propylene copolymer is used, which has a melt-flow index value of 30 g/10 minutes (ASTM D-1238), and a density value of 0.896 g/ml (ASTM D-1505).

Furthermore, a distillation bitumen is used, which has the following characteristics: penetration 80/100 dmm (ASTM D-5) and ball-ring 45°C (ASTM D-36).

One hundred grammes of bitumen and 25 g of ethylenepropylene copolymer are blended and homogenised by operating for 2 hours, at 200±5°C, with mechanical stirring.

On the so-obtained bituminous composition, the following characteristics are determined:

| - flexibility : | -6°C |
|---|---|
| - impression (23°C) : | 11 dmm |
| - impression (45°C) : | 23 dmm |
| - impression (60°C) : | 57 dmm |

## Example 2

The test is carried out in the same way as disclosed in Example 1, using an ethylene-propylene copolymer having a melt-flow index value of 25 g/10 minutes and a density value of 0.906 g/ml (ASTM D-1505).

A bituminous composition is obtained, which has the following characteristics:

| - flexibility : | -4° C |
|---|---|
| - impression (23° C) : | 12 dmm |
| - impression (45° C) : | 21 dmm |
| - impression (60° C) : | 38 dmm |

By operating in the same way as disclosed in Example 1, a bituminous composition containing 100 g of bitumen, 25 g of a fine powder of ground limestone and 25 g of an ethylene-propylene copolymer having a melt-flow index of 40 g/10 minutes and a density of 0.897 g/ml is prepared.

On the so prepared bituminous composition, the following characteristics are determined:

| - flexibility : | -4° C |
|---|---|
| - impression (23° C) : | 9 dmm |
| - impression (45° C) : | 18 dmm |
| - impression (60° C) : | 37 dmm |

Example 4 (Comparative Example)

For comparison purposes, a composition of 100 g of bitumen and 25 g of commercial atactic polypropylene is prepared.

On the so prepared bituminous composition, the following characteristics are determined:

| - flexibility : | -2° C |
|---|---|
| - impression (23° C) : | 19 dmm |
| - impression (45° C) : | 90 dmm |
| - impression (60° C) : | 90 dmm |

Example 5 (Comparative Example)

As regards the impression, a bituminous composition available from the market is tested, which contains atactic polypropylene admixed with other polymers, in the amount of 27.5 parts by weight per each 100 parts by weight of bitumen.

The following values are determined:

| - impression (23° C) : | 24 dmm |
|---|---|
| - impression (45° C) : | 90 dmm |
| - impression (60° C) : | 90 dmm |

Example 6

A series of tests is carried out by using ethyleneoropylene copolymers having an approximately constant density, and a variable melt-flow index (MFI). With these copolymers, bituminous compositions are prepared by using the bitumen described in Example 1 (100 parts of bitumen and 25 parts of copolymer).

The so obtained compositions are characterized for flexibility and impression at 23° C.

The results are reported in following Table 1.

Table 1

| Test Nr. | Copolymer | | Composition | |
|---|---|---|---|---|
| | Density (g/ml) | MFI (g/10 min) | Flexibility (°C) | Impression (dmm) |
| 1 | 0.892 | 120 | +2 | 16 |
| 2 | 0.896 | 50 | -4 | 17 |
| 3 | 0.894 | 35 | -4 | 15 |
| 4 | 0.896 | 30 | -6 | nd* |
| 5 | 0.890 | 19 | -6 | 16 |
| 6 | 0.899 | 13 | +2 | nd* |

* nd = not determined.

The composition of Example 6 had a considerably high viscosity.

## Example 7

The test is carried out in the same way as of Example 6, with ethylene-propylene copolymers having a density value which is approximately constant, but higher than of Example 6.

The characteristics of the compositions are reported in following Table 2.

Table 2

| Test Nr. | Copolymer | | Composition | |
|---|---|---|---|---|
| | Density (g/ml) | MFI (g/10 min) | Flexibility (°C) | Impression (dmm) |
| 1 | 0.905 | 60 | -4 | 10 |
| 2 | 0.905 | 41 | -4 | 10 |
| 3 | 0.907 | 24 | -6 | 9 |
| 4 | 0.904 | 17 | -4 | 10 |
| 5 | 0.908 | 8 | -2 | 10 |

The composition of Example 5 had a considerably high viscosity.

## Example 8

A series of tests are carried out by using ethylenepropylene copolymers having an approximately constant melt-flow index, and a variable density.

With these copolymers, bituminous compositions are prepared by using the bitumen described in Example 1 (100 parts of bitumen and 25 parts of copolymer).

The so obtained compositions are characterized for flexibility and impression at 23°C.

The results are reported in following Table 3.

Table 3

| Test Nr. | Copolymer | | Composition | |
|---|---|---|---|---|
| | Density (g/ml) | MFI (g/10 min) | Flexibility (°C) | Impression (dmm) |
| 1 | 0.919 | 35 | -2 | 9 |
| 2 | 0.916 | 37 | -2 | 9 |
| 3 | 0.905 | 41 | -4 | 10 |
| 4 | 0.896 | 30 | -6 | 11 |
| 5 | 0.894 | 35 | -4 | 15 |

## Example 9

The test is carried out similarly to Example 8, with ethylene-propylene copolymers having an approximately constant melt-flow index, lower than of Example 8.

The characteristics of the compositions are reported in following Table 4.

Table 4

| Test Nr. | Copolymer | | Composition | |
|---|---|---|---|---|
| | Density (g/ml) | MFI (g/10 min) | Flexibility (°C) | Impression (dmm) |
| 1 | 0.919 | 24 | -2 | 8 |
| 2 | 0.910 | 19 | -2 | 10 |
| 3 | 0.907 | 24 | -6 | 9 |
| 4 | 0.904 | 17 | -4 | 10 |
| 5 | 0.890 | 19 | -6 | 16 |

## Example 10

About 4,500 kg is prepared of a composition containing 80% by weight of the same bitumen as described in Example 1. and 20% by weight of the same ethylenepropylene copolymer as disclosed in Example 1.

In particular, the components of the composition are blended and homogenised by operating at 230±5° C, for 3.5 hours, with mechanical stirring.

With the so obtained composition, sheaths of various thicknesses are prepared by using, as the support, fiberglass web (tests from 1 to 3), and a non-woven polyester fabric, of different weights per surface unit (tests from 4 to 7)

In the preparation of the sheaths, the conventional technique of impregnation of the support with the composition in the molten state, followed by a sudden quenching inside a water bath, is used.

In particular, the following sheaths were prepared:
- Test 1 : Fiberglass web support; sheath thickness 2 mm;
- Test 2 : Fiberglass web support; sheath thickness 3 mm;
- Test 3 : Fiberglass web support; sheath thickness 4 mm;
- Test 4 : Support of non-woven polyester fabric; weight per surface unit 170 g/m2; sheath thickness 3 mm;

- Test 5 : Support of non-woven polyester fabric, weight per surface unit 170 g/m2; sheath thickness 4 mm;

- Test 6 : Support of non-woven polyester fabric, weight per surface unit 220 g/m2; sheath thickness 3 mm;

Test 7 : Support of non-woven polyester fabric, weight per surface unit 200 g/m2; sheath thickness 4 mm.

In any case, regular sheaths were obtained, which had smooth faces and well-defined edges.

These sheaths were easy and quick to apply.

## Claims

1. Water-proofing bituminous composition characterized in that it contains:

a) bitumen; and

b) a polymer of ethylene with at least one comonomer selected from amongst the alpha-olefins containing from 3 to 18 carbon atoms in their molecule, with either linear or branched chain, with said polymer having a melt-flow index value comprised within the range of from 8 to 120 g/10 minutes, and a density value comprised within the range of from 0.880 to 0.920 g/ml.

2. Composition according to claim 1, characterized in that said ethylene polymer is an ethylene-propylene copolymer having a melt-flow index value comprised within the range of from 20 to 60 g/10 minutes, and a density value comprised within the range of from 0.890 to 0.910 g/ml.

3. Composition according to claims 1 or 2, characterized in that it contains from 1 to 30 parts by weight of ethylene polymer per each 100 parts by weight of bitumen.

4. Composition according to claim 3, characterized in that said content of ethylene polymer is comprised within the range of fro 20 to 25 parts by weight per each 100 parts by weight of bitumen.

5. Composition according to claims from 1 to 4, characterized in that it additionally contains one or more from: fillers, pigments, dyes and stabilizers.

6. Water-proofing sheath, characterized in that it contains the composition according to claims from 1 to 5 in association with a support selected from felts, fabrics and laminates of organic and/or inorganic materials.

7. Water-proofing sheath according to claim 6, characterized in that said support is a non-woven polyester fabric, or a fibreglass web.

8. Water-proofing sheath according to claims 6 or 7. characterized in that it bears a surface metal coating, or a surface layer of inorganic grit.

9 . Use of the sheath according to claims from 6 to 8 for water-proofing coatings in the building industry, and in civil works in general.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | US-A-3 669 918 (C.F.RALEY)<br>* Claims 1,4; column 1, lines 54-60; column 2, example 1 *<br>--- | 1,3,5 | C 08 L 95/00 |
| X | EP-A-0 223 019 (B.A.S.F.)<br>* Claims 1,2; page 3, line 7 *<br>--- | 1,4 | |
| X | US-A-4 368 228<br>----- | 1,6,7,9 | |
| | | | TECHNICAL FIELDS SEARCHED (Int. Cl.4) |
| | | | C 08 L |

The present search report has been drawn up for all claims

| Place of search | Date of completion of the search | Examiner |
|---|---|---|
| THE HAGUE | 02-02-1989 | BUSCAGLIONE Y. |